**Europäisches Patentamt**

**European Patent Office**

**Office européen des brevets**

(19)

(11) Publication number: **0 122 472**
A2

(12) # EUROPEAN PATENT APPLICATION

(21) Application number: **84102824.4**

(22) Date of filing: **15.03.84**

(51) Int. Cl.³: **F 02 B 43/10**
**F 02 M 21/06**

(30) Priority: **23.03.83 US 478207**

(43) Date of publication of application:
**24.10.84 Bulletin 84/43**

(84) Designated Contracting States:
**AT BE CH DE FR GB IT LI LU NL SE**

(71) Applicant: **Meyer, Stanley A.**
**3792 Broadway**
**Grove City Ohio 43123(US)**

(72) Inventor: **Meyer, Stanley A.**
**3792 Broadway**
**Grove City Ohio 43123(US)**

(74) Representative: **Wasmeier, Alfons, Dipl.-Ing.**
**Postfach 382**
**D-8400 Regensburg 1(DE)**

(54) **Hydrogen airdation injection system.**

(57) System and apparatus for the controlled intermixing of hydrogen/oxygen gasses with non-combustible gasses to reduce the burning temperature and velocity of the hydrogen gas in a burner. The system utilizes a non-electrolysis hydrogen generator for developing the hydrogen/oxygen gasses. The hydrogen gas with non-volatile gasses are intermixed in a controlled air intake chamber. The exhaust gasses of the burner are returned as the non-volatile gasses to the mixing chamber in a closed loop arrangement. Upon attaining the proper burning temperature and velocity of the hydrogen gas the ratio of hydrogen/oxygen and non-volatile gasses is maintained. To effect a practical utilization, the generation of the hydrogen/oxygen gasses are controlled in start-up and in quantity. The control of the generation of gasses is effected by one or more variable parameters; such as varying the voltage applied to the plates, varying the pulse rate of the voltage on the plates, varying the spacing between the plates, switching the number of plates, and plate configuration. The hydrogen/oxygen generation is on demand; that is the hydrogen/oxygen generation on start-up is only on demand and thereafter generation is controlled in quantity by the need much in the same manner as an accelerator.

EP 0 122 472 A2

## CROSS REFERENCE AND BACKGROUND

There is disclosed in my co-pending patent application , filed September 16, 1981, Serial Number: 302,807 for a Hydrogen Generator, a generating system for converting natural water into hydrogen and oxygen gasses. In that system, the hydrogen atoms are disassociated from the water molecules by the application of a non-regulated, non-filtered, low power, direct current/ voltage electrical potential applied to two non-oxidizing similar metal plates having natural non-electrolytic water passing therebetween. The sub-atomic action is enhanced by pulsing the non-regulated and non-filtered direct current/voltage. Particularly significant with the hydrogen generator disclosed in my co-pending application is that the hydrogen/oxygen generated is in excess of that necessary for practical utilization. Further, and equally significant, is that the generation of the hydrogen/ oxygen is controlled by any one or more of several factors, i.e. varying voltage, varying pulse rate, varying spacing between plates, switching the number of plates, and plate configuration.

Therefore, the hydrogen/oxygen generation of my co-pending patent application, supra and utilized in the preferred embodiment herein, is a demand system; that is, generation of the hydrogen/oxygen is initiated upon demand. Then, the generation of the hydrogen/oxygen is controlled in quantity by the need; such as, accelerator for an automotive device.

0122472

In my co-pending patent application filed May 5, 1981, U.S. Serial Number: 262,744 for a Hydrogen-Airdation Processor, non-volatile and non-combustible gasses are controlled in a mixing stage with a volatile gas. The hydrogen airdation processor system utilizes a rotational mechanical gas displacement system to transfer, meter, mix, and pressurize the various gasses. In the gas transformation process, ambient air is passed through an open flame gas-burner system to eliminate gasses and other present substances. Thereafter the non-combustible gas-mixture is cooled, filtered for impurity removal, and mechanically mixed with a pre-determined amount of hydrogen gas. There results a new synthetic gas. The synthetic gas formation stage also meters the volume and determines the proper gas-mixing ratio for establishing the desired burn-rate of hydrogen gas. The rotational mechanical gas displacement system in that process determines the volume-amount of synthetic gas to be produced.

The above-noted hydrogen airdation processor, of my co-pending application, is a multi-stage system having utility in special applications. Whereas the hydrogen generator system of my other mentioned co-pending patent application does disclose a very simple and unique hydrogen generator.

SUMMARY OF INVENTION:

The system of the present invention in its most preferred embodiment is for a combustion system having utility in a mechanical drive system. Particularly in one instance to drive a piston in an automotive device. The system utilizes the generator of my co-pending patent application for developing hydrogen gas, Serial Number: 302,807, and other non-volatile gasses such as oxygen and nitrogen. The hydrogen gas with the attendant non-volatile gasses in a controlled ratio are fed via a line to a controlled air intake system. The combined hydrogen, non-volatile gasses, and the air after intermixing are fed to a combustion chamber wherein the mixture is ignited. The exhaust gasses of the combustion chamber are returned in a closed loop arrangement to the mixing chamber for the mixture of volatile as the non-combustible gasses.

More specifically, the generated hydrogen gas is fed to a gas mixing chamber, wherein the hydrogen gas is inter-mixed with non-combustible gasses. The mixture is fed to a carburator (air intake mixture) system.

The gas mixture is fed through nozzle to chamber in a jet spray. Valve or gate controls the amount of air intake to the jet spray. The gasses combine with the air to form a gas mixture of hydrogen, non-volatile gas, and oxygen. The mixture now combustible, but not volatile, is entered into a combustion chamber 30. The chamber 30 may be conventional in design and comprises a cylinder capable of withstanding high pressure. At the uppermost end of combustion chamber is a spark plug igniter.

0122472

The exhaust gasses, the residue of the combustion, now comprise a non-combustible mixture. These exhaust gasses are fed to the gas mixing chamber 40 as the non-combustible gasses in a closed loop arrangement.

To effect a practical utilization, the generation of the hydrogen/oxygen gasses are controlled in start-up and in quantity. The control of the generation of gasses is effected by one or more variable parameters; such as varying the voltage applied to the plates, varying the pulse rate of the voltage on the plates, varying the spacing between the plates, switching the number of plates, and plate configuration. The hydrogen/oxygen generation is on demand; that is the hydrogen/oxygen generation on start-up is only on demand and thereafter generation of the gasses is controlled in quantity by the need, much in the same manner as an accelerator.

OBJECTS:

0122472

It is accordingly a principal object of the present invention to provide a combustion system of gasses combined from a source of volatile and non-combustible gasses.

A further object of the invention is to provide a hydrogen generator that is controllable in the generation of hydrogen/ oxygen gasses and therefore capable of controlling the rate of firing of a burner system.

Another object of the invention is to provide such a combustion system that utilizes a non-electrolysis hydrogen generator as the volatile gas and the exhaust of the combustion system as the non-combustible gas.

A further object of the invention is to provide such a combustion system that may be incorporated in a mechanical drive system.

Still other objects and features of the present invention will become apparent from the following detailed description when taken in conjunction with the drawings in which:

BRIEF DESCRIPTION OF DRAWINGS:

Figure 1 is a crossectional mechanical schematic illustration of the present invention in its most preferred embodiment.

Figure 2 is a block schematic illustration of the preferred embodiment of Figure 1.

Figure 3 is an alternative gas system replacement for that shown in Figure 1.

0122472

Figure 4 is a block schematic illustration of a complete drive system utilizing the concepts of the present invention.

Figure 5 is a basic schematic drawing of the hydrogen generator utilized in the preferred embodiment as the motive force in a drive system.

Figure 6 is a further application of the present invention in a regenerative energy feedback system.

Figure 7 illustrates the voltage potential as applied to several plates.

Figure 8 is a graph illustration of the burning velocity of standard fuels for a land vehicle.

Figure 9 is a graphical illustration of gas generated versus different applied power, for various types of water conditions.

Figure 10 is a gas generated versus pulse direct current repetition rate.

Figure 11 is a graphical illustration of gas generation for three different geometrical configurations of plate structure.

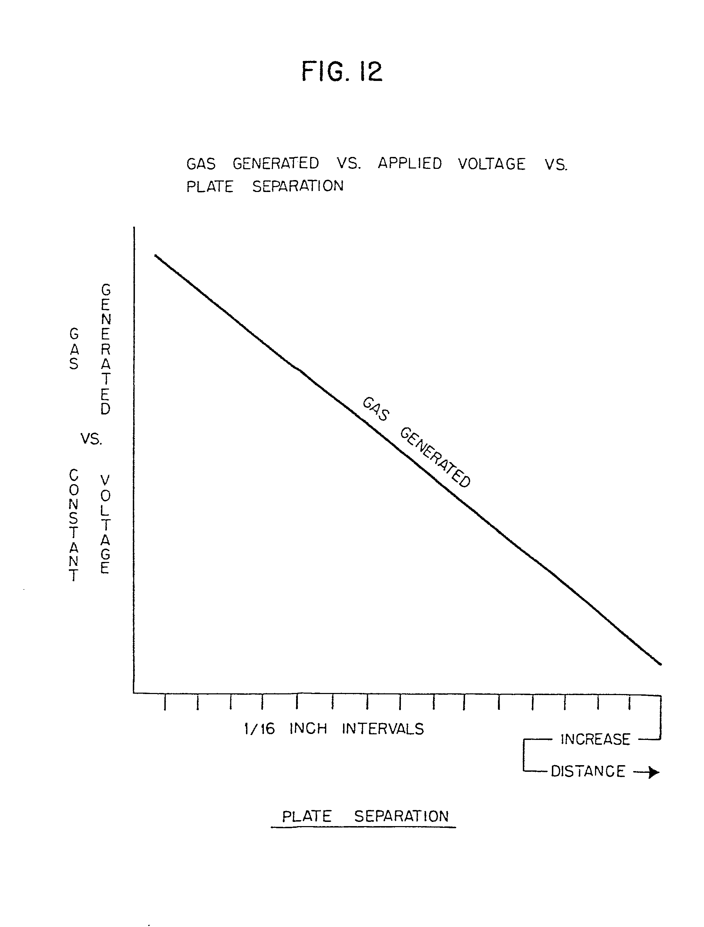

Figure 12 is a graphical illustration of gas generated with the plates having increasing separation.

DETAILED DESCRIPTION OF DRAWINGS:


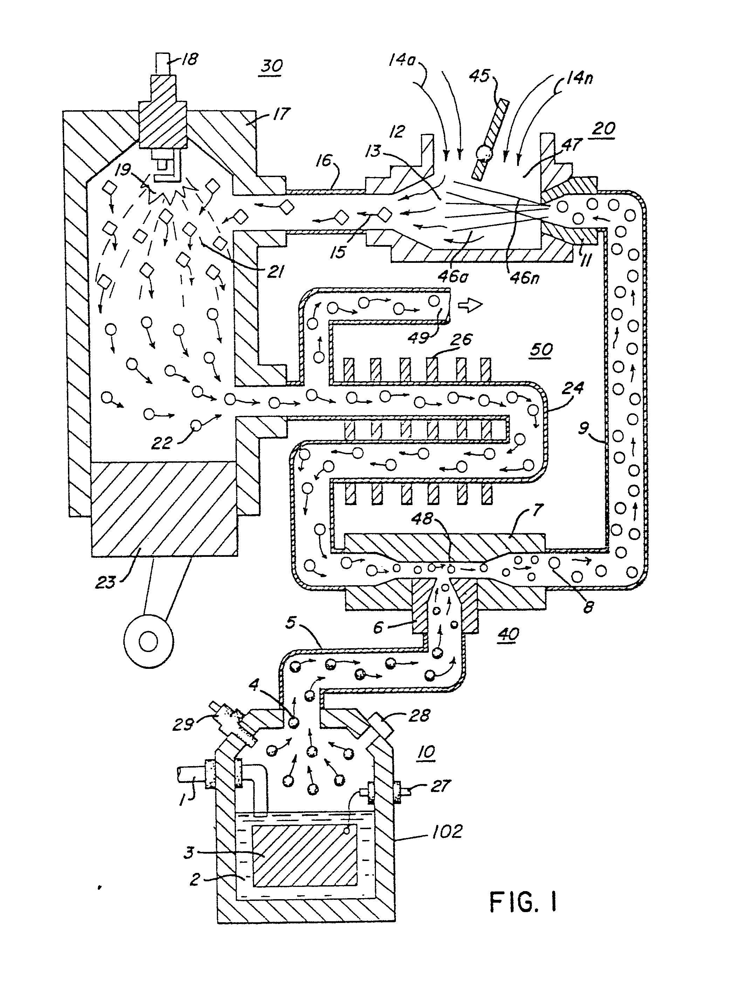

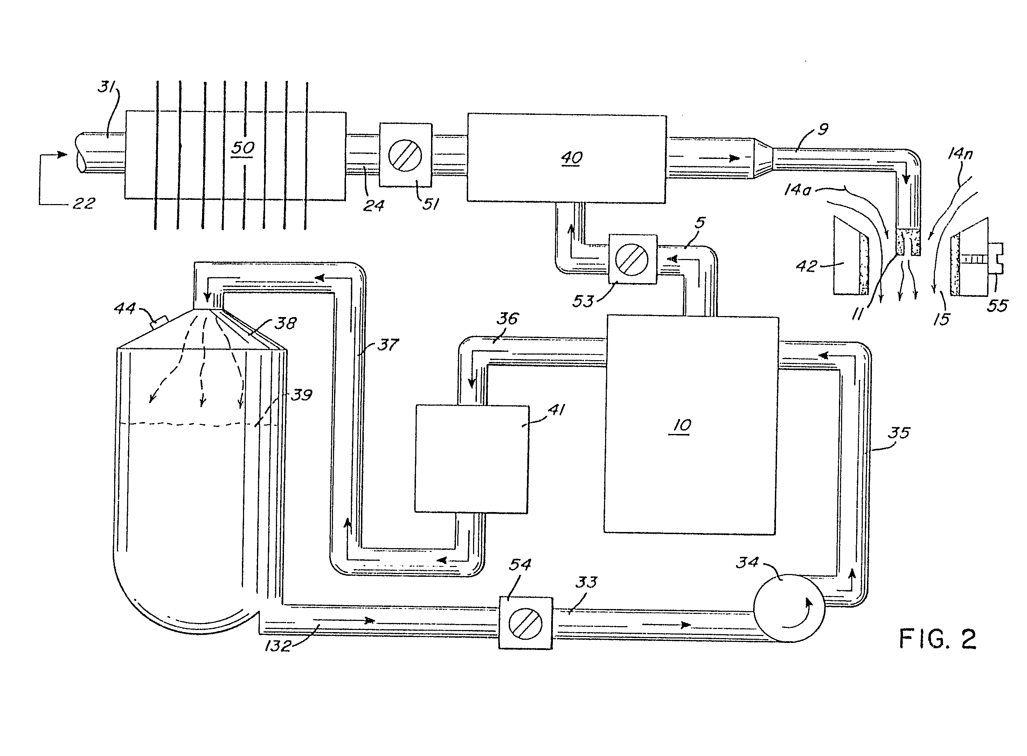

Referring particularly to Figure 1 the complete overall combustion system is illustrated together with a mechanically driven piston. Similarly, Figure 2 illustrates the complete system in its preferred embodiment.

With particular reference to Figure 1, the hydrogen source 10 is the hydrogen generator disclosed and described in my co-pending application, supra. The container 102 is an enclosure for a natural water bath 2. Immersed in the water 2 is an array of plates 3 of similar non-oxidizing material. Applied to plates 3 is a source of pulsed direct current potential via electrical inlet 27.

The action of the pulsed direct current, a voltage/current potential, on the plates causes the hydrogen and oxygen atoms to become disassociated from the water molecule. In that the action is a sub-atomic action and not a chemical action any water irrespective of source may be utilized.

Varying either the potential of the direct current source or the pulse rate of the pulsing of the direct current potential will vary proportionately the generation of the hydrogen/ oxygen. Other factors are disclosed for varying the output of the generator.

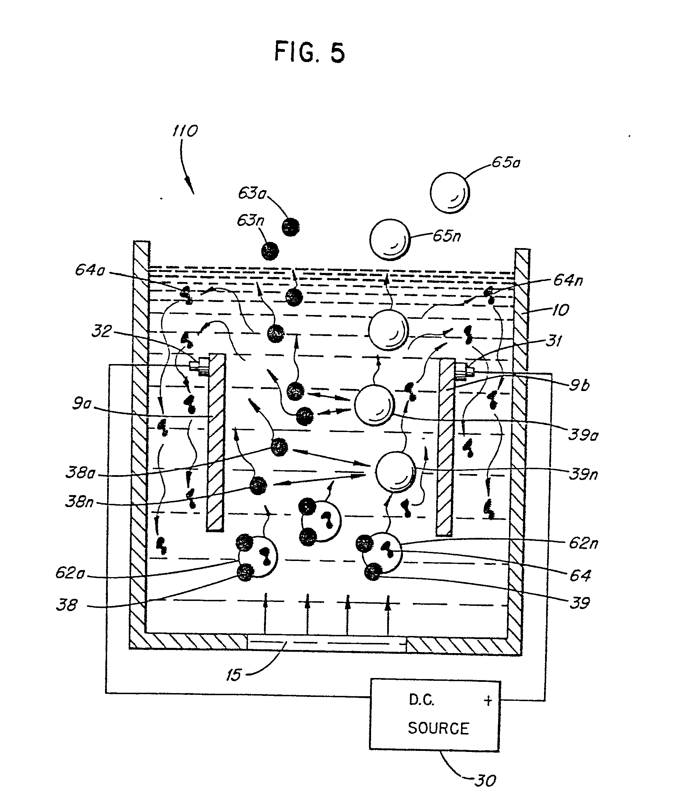

More specifically with reference to Figure 5, to be taken in conjunction with the generator 10, of Figure 1, there is illustrated schematically in cross-section the invention in its most simplified embodiment.

A structure 110 contains a water supply 15. The water 15 is natural water and can be either pure distilled water, or salt, or tap, well, rain, river, or other water containing contaminants. However, specifically, no electrolyte or chemicals are added to the water 15. The water 15 comprising molecules 62a xxx 62n, of hydrogen 38a xxx 38n, oxygen 39a xxx 39n, and foreign substances 64a xxx 64n is passed between a pair of plates 9a and 9n, consisting of similar non-oxidizing metal, submerged therein.

To replenish the expended water the generator provides a continuous water source 1. FIG.

Attached to terminal 32 on the plates 9a is a wire having its other end connected to the negative terminal, and to terminal 31 on the plate 9b is connected another wire having its other end connected to the positive terminal of the direct current electrical source 30.

The direct current voltage applied to the water passing between plates 9a and 9b, is sufficient to disassociate the hydrogen atom 39a xxx 39n and oxygen atoms 38a xxx 38n (appearing as bubbles) from the water molecules 62a xxx 62n. The foreign substance or contaminants 64a xxx 64n, are broken away from the water molecule 62a xxx 62n and spills over the outside area of the plates 9a and 9b to a collector at the bottom of the tank 110. The hydrogen gas 63a xxx 63n and oxygen gas 65a xxx 65n rises above the liquid.

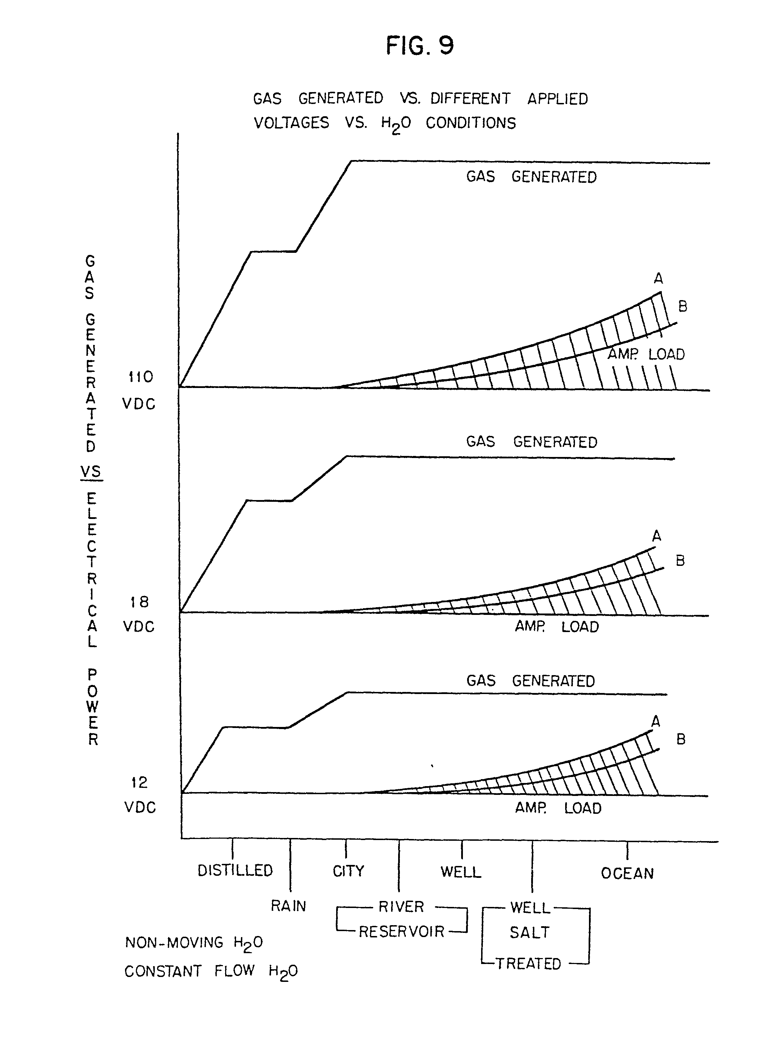

As illustrated in Figure 9, increasing the voltage applied to the plates 9a and 9b enhances the forceful sub-atomic action upon the water molecule, which in turn increases the hydrogen/oxygen gas generation. The gas generated is substantially a linear function to the magnitude of the voltage applied to the plates. Therefore, by increasing or decreasing the direct current voltage potential applied to the plates the hydrogen/oxygen rate of generation is directly related. Also, and most significantly, the voltage is increased and decreased but the current is maintained constant at a very low level. That is, the direct current voltage potential is current limited.

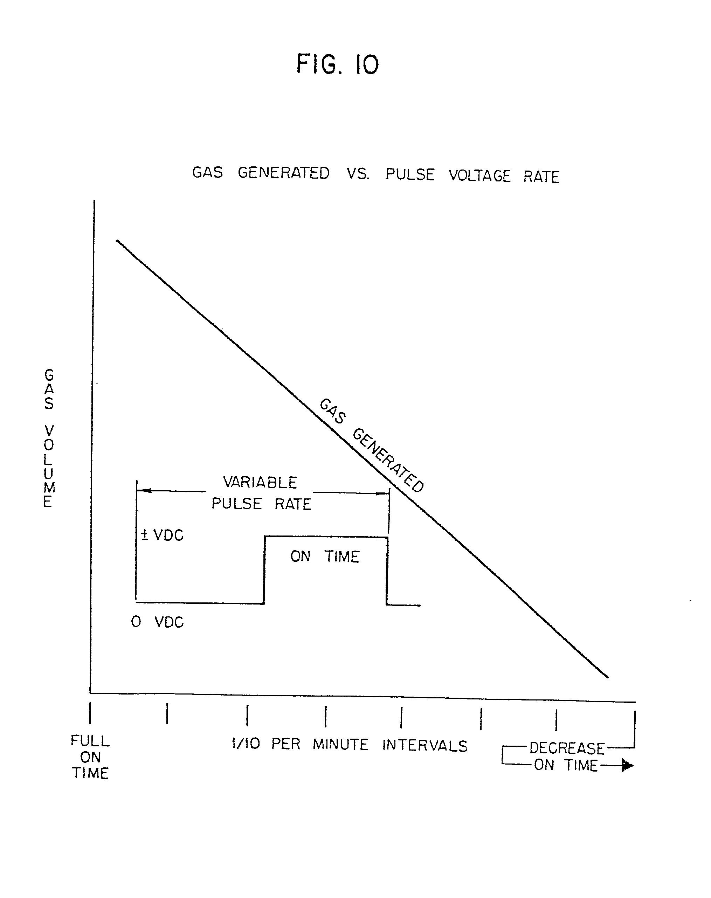

As shown in Figure 10, it has also been found that pulsing the voltage applied to the plates 9a and 9b enhances the forceful sub-atomic action upon the water molecule, which in turn increases the hydrogen/oxygen gas generation. The gas generated is a linear function to the pulse repetition rate of the voltage applied to the plates 9a and 9b.

The safety valve 28 is rupturable upon excessive gas buildup; whereas the switch 29 is a gas pressure switch to maintain a predetermined gas pressure level.

The generated hydrogen gas 4 is fed via pipe 5 to a gas mixing chamber 7, wherein the hydrogen gas is inter-mixed with non-combustible gasses 22 from a source hereinafter described.

The mixture of volatile gas and non-combustible gasses are fed via pipe line 9 to a carburator (air-mixture) system 20.

The gas mixture 8 is fed through nozzle 11 to chamber 47 in a jet spray 46. Valve or gate 45 controls the amount of air-intake the Jet spray 46 of gasses combines with the intake air 14 to form a gas mixture 15 of hydrogen non-volatile gas, and oxygen 15 now combustible, but not volatile, is entered into combustion chamber 30, via pipe line 16. The chamber 30 may be conventional in design and comprises a cylinder 17 capable of withstanding high pressure. At the uppermost end of combustion chamber 30 is a spark plug igniter 18.

In a controlled manner, relative to the piston 23 stroke, the spark ignition 19 via plug 18, causes the mixed gasses 15 to combust. The compression 21 caused by the combustion, forces the piston 23 to push downwardly in the cylinder 17.

The exhaust gasses 22, the residue of the combustion 21, now comprises a non-combustible mixture 22. These exhaust gasses 22 are fed via pipe line 24 to the gas mixing chamber 40 as the non-combustible gasses as aforesaid.

0122472

The pipe line 24 passes through cooling chamber 50 for cooling of the gasses therein. The cooling chamber 50 also functions as a spark arrestor to eliminate the possibility of gas ignition inside the mixing chamber 40. The excess non-combustible gasses are exhausted via outlet 49, to be expelled into the atmosphere.

The apparatus of Figure 2 comprises much the same system as Figure 1. In this embodiment the components are depicted more explicitly in their structural relationship in an alternate arrangement. Basically, the system is operable as that in Figure 1, i.e. a mixture of volatile (hydrogen) gas and non-combustible gasses (exhaust).

The hydrogen generator 10, as aforesaid, may be any form of a generator, however, in the preferred embodiment the hydrogen generator is that of my co-pending application, supra. The water system in a closed loop operation comprises a reservoir or tank 39 with an outlet 32 having pipe line 33 connected thereto, water control valve 54 is operable to adjust the water flow. The water is pumped by pump 34 in line 33 to line 35, and then to the generator 10.

The overflow water expended and non-expended is expelled from generator 10 into line 36, filtered in filter 41 of contaminants, and returned to tank 39 via pipe line 37. The loop is completed.

0122472

The gasses generated from the water in generator 10 also includes the oxygen component of the water in addition to nitrogen.

The outlet 5 on the generator 10 receives the volatile and non-volatile (oxygen and nitrogen) gasses generated thereby and feeds the same to the mixing chamber 40. The flow of the hydrogen volatile gas is, of course, critical; therefore, there is incorporated in line 5 a gas flow valve 53 to adjust the hydrogen flow.

The exhaust gasses entering input 22 are fed via inlet pipe 31 through the cooling chamber also enter the mixing chamber and spark arrestor 50 and into outlet pipe 24. These gasses from chamber 50 too, are flow controlled by the flow valve 51 in pipe line 24.

The output of mixing chamber 40, as described relative to Figure 1 and 2 is fed via line 9 to a gas mixture system 42. In this instance the intake air 14 may be in a carburator arrangement with an intake adjustment 55 that adjusts the plate 42 opening. The gas mixture 15 is fed into the carburator by nozzle 11 and mixed with the air 14.

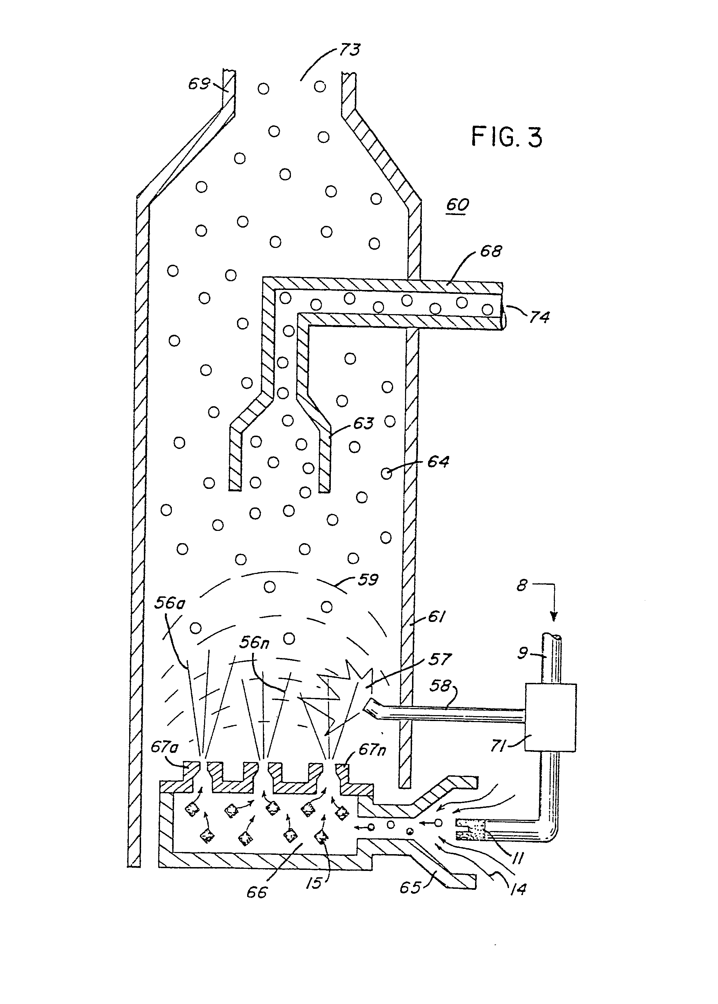

With particular reference to Figure 3 there is illustrated an alternative combustion chamber 60 that may be utilized in lieu of the chamber 30 of Figures 1 and 2.

In this embodiment the volatile and non-combustible gas mixture that is generated and mixed in the arrangement of Figures 1 and 2, enters inlet 8 and is directed by pipe line 9 and nozzle 11 to the cone 65. The gas mixture combines with air 14 as it enters cone area 65. The combined gas mixture, atomized by the jet nozzle 11 with air at intake 14 is directed by the cone 65 to the dispersing chamber 66. There the gas mixture 15 is further mixed with air 14 to form combustible gas 15. The gas/air mixture is dispersed via ports 67a xxx 67n from the dispersing chamber 66 into the firing area of the combustion chamber 60.

The gas mixture entering inlet 8 is also fed by pipe line 9 to a separation chamber 71. This chamber sections off a controlled amount of the intake gas mixture to the pilot light line 58. The pilot light firing 57 gas is also sequenced by the drive, muxh in the same manner as the cylinder of an automobile engine.

The mixed gas 56, ejected from ports 67a xxx 67n of the dispensing chamber 66, are ignited by the pilot combustion 57 and thereby causing combustion 59 of the mainstream gasses.

As the non-combustible gasses 64 (exhaust gasses 22 of Figure 1) rise upwardly in the cylinder 61, of the combustion chamber 60 the cone 63 captures a portion of the non-combustible gasses 64. The captured exhaust gas is returned via pipe line 72 and outlet 74 to the combustion process as set in Figure 1 or expelled for other purposes.

0122472

-2264

The major portion of the non-combustible gasses 64 by-pass the cone 63 and rise further to the outlet exhaust 69 and are expelled at opening 73.

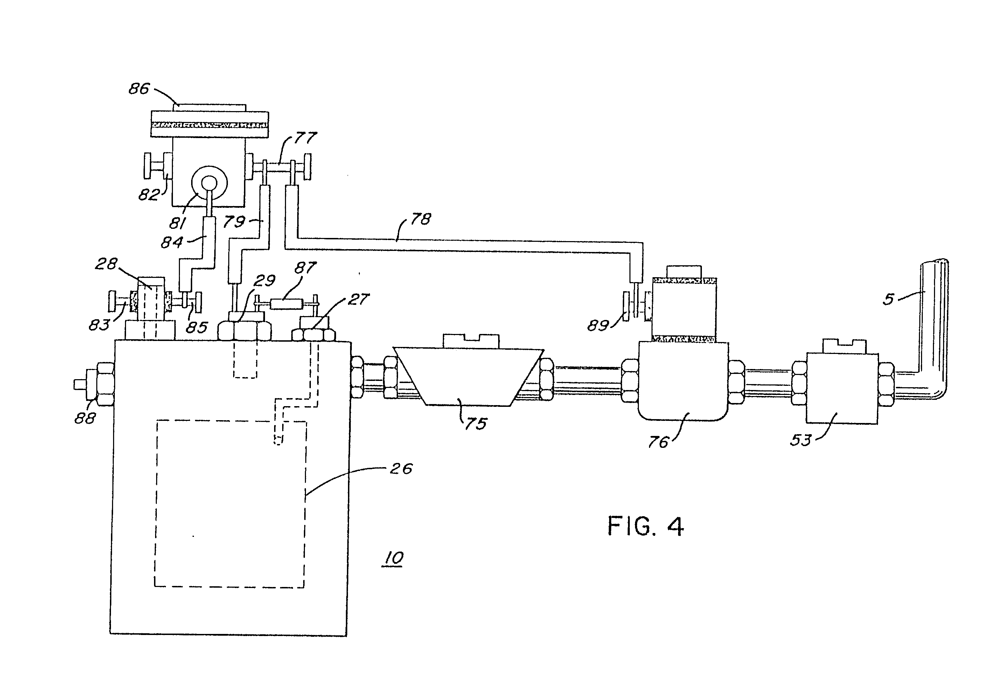

In the constructed arrangement of Figure 4, there is illustrated a gas control system that may be retrofitted to an existing automobile internal combustion engine without changing or modifying its design parameters or characteristics.

As low-voltage direct current is applied to safety valve 28, solenoid 86 is activated. The solenoid applies a control voltage to the hydrogen generator plates 26 via terminal 27 through pressure switch 29. As the electrical power activates electric solenoid 86, hydrogen gas is caused to pass through flow adjustment valve 53 and then outlet pipe 5 for utilization.

Gas regulator valve 75 is utilized to reduce the pressure level inside hydrogen generator 10. The pressure differential hydrogen gas output to gas mixing chamber 40 is, for example, 30 lbs. to 15 lbs. Once hydrogen generator 10 reaches an optimum gas pressure level, pressure switch 29 shuts off electrical power to the hydrogen excitors. If the chamber pressure exceeds a predetermined level, the safety release valve 28 is activated disconnecting the electrical current and thereby shutting down the entire system for safety inspection.

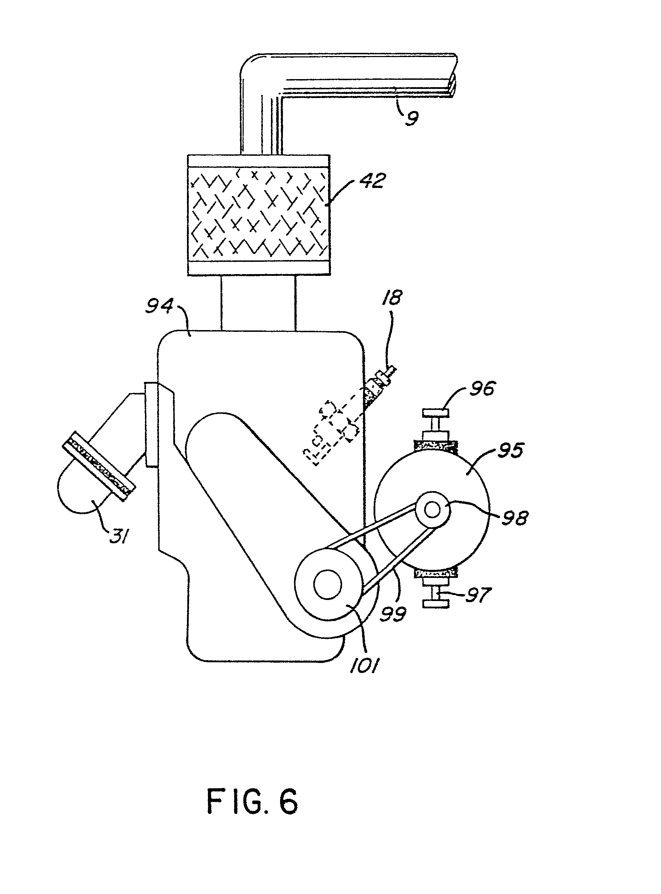

Similar to an automobile engine or other drive force requiring an electrical energizing source, the present invention may include the regenerative energy feedback arrangement shown in Figure 6.

The process utilizes a mechanical drive system as described relative to Figures 1 and 2; and which mechanical drive may be that of a piston such as utilized in a gasoline engine. In operation, the process mixture is ignited much in the same manner as in Figure 1. The drive mechanism in turn activates electrical voltage of alternator 95 whose output is fed back to the hydrogen generator and utilized as the firing voltage on the spark plug 18; again, in a closed loop arrangement.

The ratio of hydrogen/oxygen gasses is varied to obtain optimum burning velocity and temperature for the particular combustion engine. Once this is attained, the ratio, under normal conditions, will not be altered. Other engines having different fuel burn temperature and velocity will be adjusted in ratio of hydrogen/oxygen to non-combustible gasses in the same manner as exemplified above.

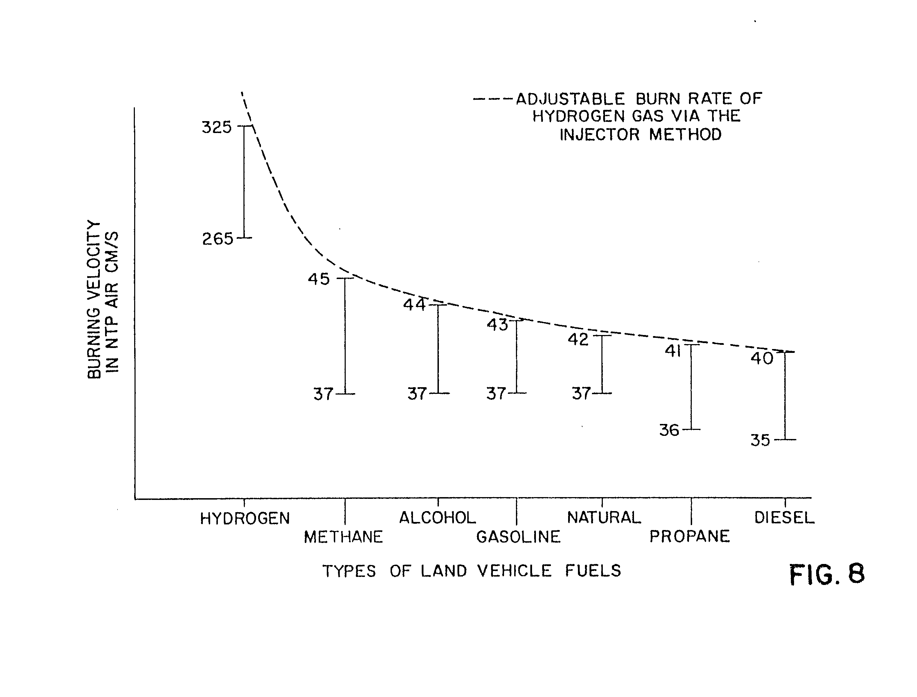

With reference to Figure 8 there is illustrated the buening velocity of various standard fuels. It can be seen the common type of fuel for a land vehicle burn at a velocity substantially less than with hydrogen gas.

In an application of the preferred embodiment to the present invention i.e., an automobile, the proper burning velocity and temperature will be attained as aforesaid, to match that of the gasoline burning engine, the deisel burning engine or its particular fuel. This ratio once attained will not be altered. In operation of the engine, when the engine is not running, there is no tank of hydrogen fuel in the automobile, such as suggested by the prior art. Applicant's automobile simply has a tank of water. Upon start-up, hydrogen/oxygen from the tank of water is immediately generated, and ignition takes place. Again, only enough hydrogen/oxygen is generated to effect combustion.

Further in operation of the automobile utilizing the present invention, when it is desired to accelerate the firing rate of the engine, such as may occur in normal driving, the rate of generation of the hydrogen/oxygen is accelerated by the demand controls. The greater demand for acceleration, the greater the generation of the gasses.

Again, in the practical working embodiment of the automobile utilizing the hydrogen/oxygen engine of the present invention, the "throttle" for accelerating the speed of the engine will be an electronic control. This may be such as for varying the pulse rate or the magnitude of the voltage of the direct current voltage potential applied to the plates of the generator.

In lieu of increasing the electrical power or varying the pulse rate to enhance the sub-atomic action on the water molecules, other conditions have been considered.

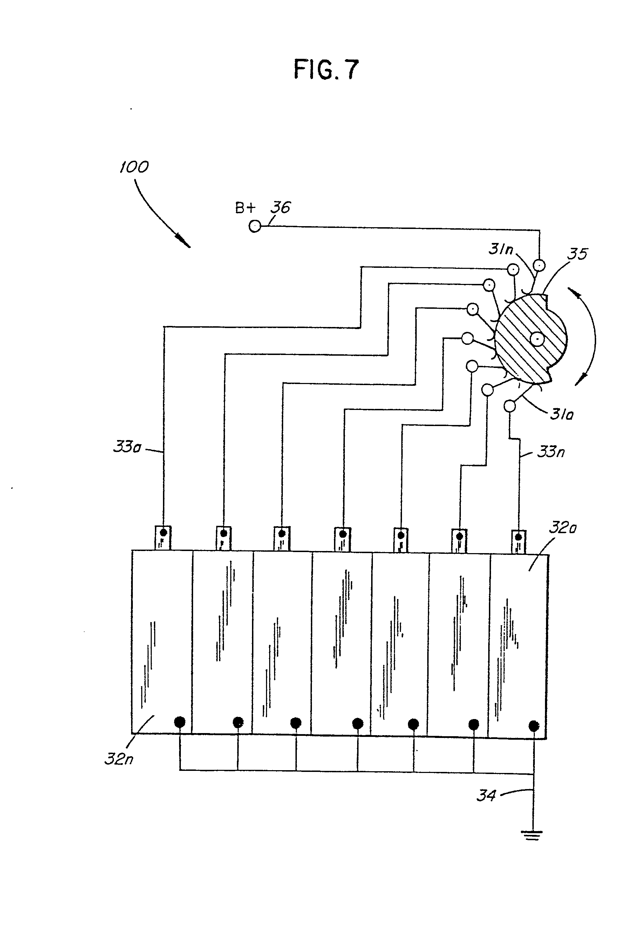

With particular reference to Figure 7 there is illustrated an electronic switch for switching on and off the rippled d.c. output of supply 30. The plates 32a xxx 32n are connected to common ground 34. The positive terminals 33a xxx 33n are connected respectively to contacts 31a xxx 31n of switch 35 rotatively making and breaking contact with the direct/current voltage source 30.

It can be appreciated the greater the number of cells the more hydrogen/oxygen generated. In a practical embodiment, the combustion engine is started on a minimum of number of cells. Upon acceleration the greater the need for more hydrogen/oxygen gas, hence the increase in the number of cells. In this way, the switch 35 is an accelerometer.

Again, in that the increase in generation of hydrogen/oxygen by the actuation of switch 35, the increase is a step function. It is deemed desirable therefore, that the configuration of switch control of cells be in conjunction with the aforesaid linear type of acceleration.

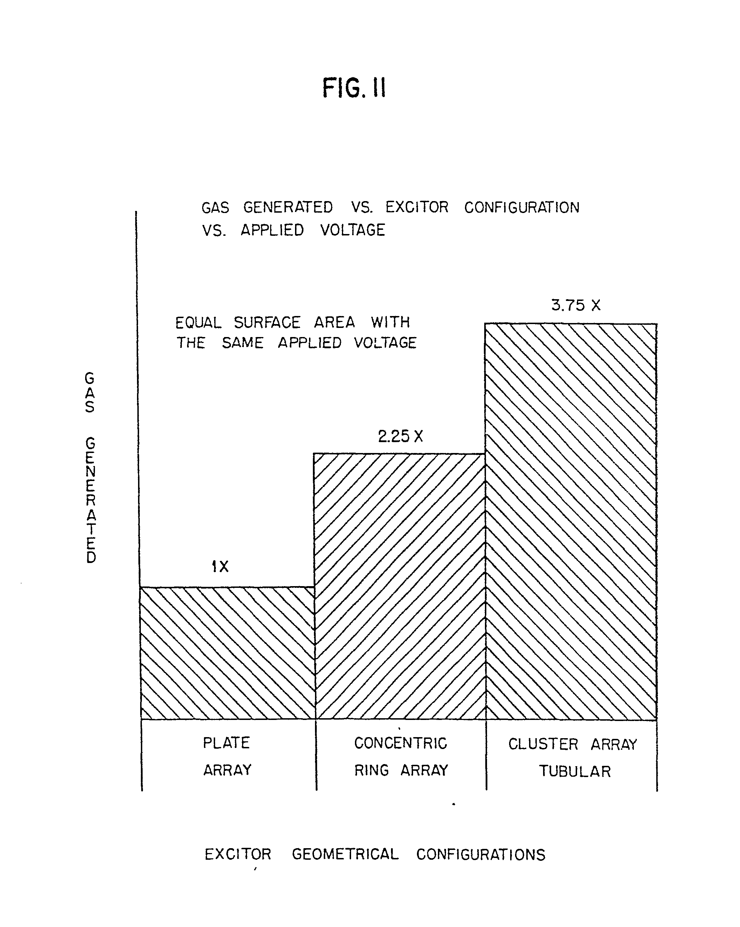

Other structured factors altering, affecting, and particularly enhancing the hydrogen gas generating comprises altering plate spacing, shown in Figure 10 and the plate configuration, shown in Figure 11. Each of these factors have been taken into consideration in the development of a fuel cell to provide optimum results for a preferred embodiment.

As stated above another factor affecting the gas generation output is the plate separation. With particular reference to Figure 10 there is illustrated graphically plate spacing versus gas generation. As can be seen the greater the spacing the less gas generation. The efficiency versus spacing of the plates is a linear decrease with spacing.

With particular reference to Figure 11, there is illustrated graphically the efficiency of the tubular plate array of Figure 2, the cluster tubular array of Figure 3, and the flat plate array of Figure 4. Specifically there is shown the gas generation versus the plate configuration. It can be appreciated from this graph why the embodiment of Figure 1 includes the cluster tubular array of Figure 2.

Although the invention in its preferred embodiment is best exemplified in an internal combustion engine, it can be envisioned that the concepts of the system and apparatus may be utilized in other types of controlled burners.

IN THE CLAIMS

— 1 —

0122472

Claim 1.  A burner system comprising:

a non-electrolsys hydrogen/oxygen generator,

a housing having a water resevoir for retaining non-electrolytic natural water therein,

a pair of similar non-oxidizing plates positioned in said natural water resevoir,

a direct current voltage source connected to said plates to apply an electrical voltage/low current thereto and thereby to diassociate the hydrogen gas atoms and oxygen gas atoms from said water molecules; and

a gas mixing chamber,

conduit means including a control valve connecting the hydrogen/oxygen gasses from said hydrogen/oxygen generator to said mixing chamber,

a source of non-volatile gas,

conduit means including a control valve connecting the non-volatile gas from said non-volatile source to said mixxing chamber,

said first and second named control valves regulating the gas mixture ratio output from said mixing means,

air-intake means connected to the output of said mixing chamber for combing air with said mixed gasses,

a gas burner having said controlled amount of mixed gasses from said mixing chamber and said air-intake means fed thereto,

means to ignite said gas/air mixture in said gas burner, and

demand control means for varying the release of said hydrogen/oxygen gas atoms from said water molecules to thereby accelerate and deaccelerate the rate of ignition of said gas/air mixture in said burner..

0122472

2. The burner system of claim 1 wherein said air-intake means further comprises a valve for controlling the amount of air-intake to said mixed gasses in said mixing chamber.

3. The burner system of claim 1 wherein said gas burner and said means to ignite said gas/air mixture is a combustion chamber having an ignitor.

4. The burner system of claim 3 further including a drive mechanism disposed relative to said combustion chamber and wherein said drive mechanism is responsive to said gas burning.

5. The burner system of claim 3 wherein said combustion chamber further comprises outlet means for expelling the exhaust gasses therefrom, and means for returning a portion of said exhaust gasses to said mixing means.

6. The burner system of claim 3, further including a pilot chamber and wherein a portion of said gas/air mixture is directed thereto,

means for connecting said pilot chamber to said combustion chamber, and

means to ignite said gas/air mixture portion to provide a pilot ignition to said combustion chamber.

7. The burner system of claim 4 wherein said means to ignite said gasses comprises an electrical ignition means and a source of electrical energy connected to said ignitor in a closed loop arrangement with said drive mechanism.

8. The burner system of claim 3 wherein said combustion chamber comprises a mixed gas/air dispersing chamber having a series of ports therein.

9. The burner system claim 5 wherein said means for returning a portion of said exhaust gasses to said mixing means further includes cooling means for cooling said exhaust gasses.

10. The burner system of claim 5 wherein said means for returning a portion of said exhaust gasses to said mixing means further includes a spark arrestor for preventing uncontrolled combustion.

11. The burner system of claim 3 wherein said hydrogen generator includes a source of electrical potential, and wherein said source of electrical potential is connected in a closed loop arrangement with said drive mechanism.

12. The burner system of claim 1 wherein said demand control means for accelerating and deaccelerating the ignition of said gas/air mixture, further comprises:

varying the magnitude of said electrical potential applied to said plates.

13. The burner system of claim 12 wherein said demand control means of varying the electrical potential applied to said plates further comprises varying the voltage and maintaing the current of said potential constant.

14. The burner system of claim 1 wherein said demand control means for accelerating and deaccelerating the ignition of said gas/air mixture, further comprises:

means for pulsing said direct current potential.

15. The burner system of claim 14 wherein said means for pulsing said direct current potential further comprises varying the pulse repetition rate of said pulses to control the time period of said electrical potential on said water molecules.

16. The burner system of claim 1 wherein said demand control means for accelerating and deaccelerating the ignition of said gas/air mixture, further comprises:

means for varying the configuration of said plates.

17. The burner system of claim 1 wherein said demand control means for accelerating and deaccelerating the ignition of said gas/air mixture, further comprises varying the spacing between said plates.

18. The burner system of claim 1 wherein said demand control means for accelerating and deaccelerating the ignition of said gas/air mixture, further comprises:

means for varying the number of plates in said hydrogen generator.

19. The burner system of claim 15 wherein said demand control means for accelerating and deaccelerating the ignition of said gas/air mixture by varying the pulse repition rate of said pulsed voltage further comprises interrelating said voltage magnitude with said pulse repetition rate.

- 5 -

0122472

20. The burner system of claim 15 wherein said demand control means for accelerating and deaccelerating the ignition of said gas/air mixture by varying the pulse repetition rate of said pulsed voltage further comprises interrelating said voltage magnitude with said pulse repetition rate and said means for varying said number of plates.

21. The burner system of claim 15 wherein said demand control means for accelerating and deaccelerating the ignition of said gas/air mixture by varying the pulse repetition rate of said pulsed voltage further comprises interrelating said voltage magnitude with said pulse repetition rate and said means for varying said number of plates, and further with said means for varying the spacing of said plates.

0122472

FIG. I

FIG. 2

0122472

FIG. 3

FIG. 4

FIG. 5

FIG. 6

FIG.7

100

B+  36

31n

35

31a

33a

33n

32a

32n

34

FIG. 8

Chart: BURNING VELOCITY IN NTP AIR CM/S vs TYPES OF LAND VEHICLE FUELS

Legend: ---- ADJUSTABLE BURN RATE OF HYDROGEN GAS VIA THE INJECTOR METHOD

Data ranges:
- HYDROGEN: 265–325
- METHANE: 37–45
- ALCOHOL: 37–44
- GASOLINE: 37–43
- NATURAL: 37–42
- PROPANE: 36–41
- DIESEL: 35–40

# FIG. 9

GAS GENERATED VS. DIFFERENT APPLIED
VOLTAGES VS. $H_2O$ CONDITIONS

## FIG. 10

GAS GENERATED VS. PULSE VOLTAGE RATE

GAS VOLUME

GAS GENERATED

VARIABLE PULSE RATE

± VDC

ON TIME

0 VDC

FULL ON TIME

1/10 PER MINUTE INTERVALS

DECREASE ON TIME

# FIG. II

GAS GENERATED VS. EXCITOR CONFIGURATION
VS. APPLIED VOLTAGE

EQUAL SURFACE AREA WITH
THE SAME APPLIED VOLTAGE

3.75 X

2.25 X

1X

GAS GENERATED

PLATE ARRAY

CONCENTRIC RING ARRAY

CLUSTER ARRAY TUBULAR

EXCITOR GEOMETRICAL CONFIGURATIONS

0122472

# FIG. 12

GAS GENERATED VS. APPLIED VOLTAGE VS.
PLATE SEPARATION

GAS GENERATED VS. CONSTANT VOLTAGE

GAS GENERATED

1/16 INCH INTERVALS

INCREASE

DISTANCE →

PLATE SEPARATION